Europäisches Patentamt

European Patent Office

Office européen des brevets

(19)

(11) Publication number: 0 145 206
A2

(12) # EUROPEAN PATENT APPLICATION

(21) Application number: 84307371.9

(22) Date of filing: 26.10.84

(51) Int. Cl.⁴: G 06 F 15/02
H 04 N 1/413, H 04 N 1/21

(30) Priority: 08.11.83 GB 8329806

(43) Date of publication of application:
19.06.85 Bulletin 85/25

(84) Designated Contracting States:
AT BE CH DE FR IT LI NL SE

(71) Applicant: International Standard Electric Corporation
320 Park Avenue
New York New York 10022(US)

(72) Inventor: Crossland, William Alden
15 School Lane
Harlow Essex(GB)

(72) Inventor: Peters, Jack Rowland
The Pound House Great Cranfield
Near Dunmow Exxex(GB)

(72) Inventor: Scarr, Robert Walter Alister
High Ends Lower Street
Stansted Essex(GB)

(72) Inventor: Smith, Harry John
66 Elmwood
Sawbridgeworth Hertfordshire(GB)

(72) Inventor: Astorino, Frank
40 Maple Lane
Essex Falls New Jersey 07021(US)

(74) Representative: Vaufrouard, John Charles
ITT Patent Department UK Maidstone Road Foots Cray
Sidcup KentDA14 5HT(GB)

(54) Intelligence display arrangement.

(57) An intelligence display arrangement suitable for an "electronic book" uses a smectic liquid crystal display device of the ambiently lit type. The pages of the "book", which are recorded on a relatively large capacity store, are transferred to an immediate access store which holds a small number of such pages. They are then transferred to the display device as needed by, and under the control of the user.

Where the "electronic book" is for partially sighted users, it is possible to present a page, part of a page, a line, or part of a line on an enlarged scale.

EP 0 145 206 A2

./...

FIG. 3

——————— INFORMATION AND CONTROL
– – – – POWER FEED

INTELLIGENCE DISPLAY ARRANGEMENT

The present invention relates to an intelligence display arrangement, and especially to such an arrangement for displaying the pages of a book, magazine or catalogue and which finds particular application in the production of books for the partially sighted.

Publishing is a labour-intensive industry in which costs tend to increase with time, especially for specialised books and the like where the demand is low. Books use much paper, which uses up considerable and decreasing natural resources. With the availability of such "electronic" means of conveying intelligence, the possibility of using such means in place of books arises, especially since such electronic means are relatively compact.

The present invention seeks to provide such an electronic display arrangement.

According to the invention there is provided an intelligence display arrangement characterised in a static electronic display device of the co-ordinate matrix type on which a page of text or illustrations, or part of such a page, can be displayed, a memory unit which contains the material to be displayed, and control means for the arrangement, wherein when the arrangement is in use the pages to be displayed are successively transferred to the immediate access store, each page or each part

- 2 -

thereof being transferred from the immediate access store to the display device as required by, and under the control of, the user.

One form of display device which is especially suitable for use in such an arrangement is a liquid crystal display device, which is portable, compact, has a good performance, and relatively low power consumption.

One form of book for which the present invention is especially suitable is the provision of "electronic books" for partially-sighted readers. Some public libraries have limited stocks of books with extra large print for use by people with poor eyesight. These books are large and have a limited market, and so are expensive. The present invention readily provides "electronic books" for such use.

In order that the invention and its various other preferred features may be understood more easily an embodiment thereof will now be described, by way of example only with reference to the drawings, in which:-

Figure 1 is a front view of an intelligence display arrangement constructed in accordance with the invention and in the form of an electronic book,

Figure 2 shows a microcassette for the display arrangement of Figure 1,

Figure 3 is a block schematic diagram of an electronic book as outlined with reference to Figures 1 and 2,

Figure 4 is a block schematic diagram of a possible arrangement for size enhancement of the characters of the display, and

Figure 5 is a block schematic diagram of an arrangement for an "electronic book" especially for partially-sighted users.

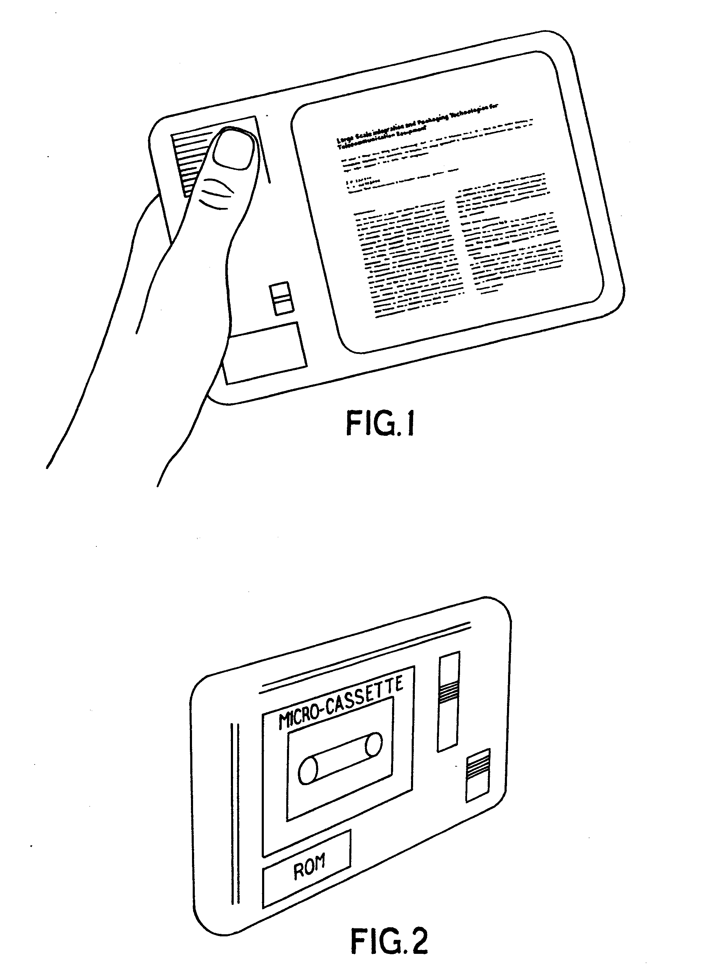

The display arrangement of Figure 1 has a "black on white" contrast approaching that of print on paper. Mass storage uses a micro-cassette indicated in Figure 2 which is readily replaceable, and control instructions for the microprocessor in the arrangement use a ROM.

The "book" whose "mechanical" form is shown in Figures 1 and 2 consists of a module of a size of the order 12" x 8" x 2" or smaller, which has on one of its largest faces a smectic flat panel liquid crystal display realised preferable in an ambient lit (as opposed to back lit or edge lit) form. Such a device is highly economical of power. Mounted behind the display are the circuits needed to drive it, immediate access storage (e.g. semiconductor RAM) which can store one or more pages of text, and a power supply (normally primary or secondary batteries). The textual material is stored in a memory pack, e.g. a cartridge or flat disc, which plugs directly into the back of the "book", but an option is provided to enable an external source, e.g. portable cassette, to be plugged into the module instead of the internal memory pack. Another option for certain applications is to provide a port for down-loading material for the books etc. over a telecommunications link from a central data base. This would be useful for electronic newspapers or for repair service /maintenance personel who might need to refer to a central data base. Such information would need to be stored in the "book" module, which entails the insertion of read/write memory packs into the module in place of the normal read only memory pack. However, when the volume of down-loaded information is small it is stored directly in the RAM, dispensing with the need for the read/write memory pack.

- 4 -

The "book" module contains a microprocessor to control the data transfers that take place between the various memory and communication elements to service key inputs and to translate these into the appropriate actions, and to control the writing of characters to the display.

The external surfaces of the module carry keys (touch sensitive or mechanical) for the perform functions, the number of which depends on the individual product but the following are possible

(a)     page advance

(b)     page retract

(c)     page search (against a specific page number)

(d)     fast rewind

(e)     browse forward

(f)     browse backward

(g)     overlay page ... (which uses a split screen technique to show two pages of information simultaneously)

(h)     word search (implies an ability to input alpha characters)

An ambiently lit display consumes no power in the quiescent state. Power is consumed to keep the RAM alive, on transfers between memory pack and RAM, on transfers from memory to the display, to carry out internal processing, and in scanning the key field for operation.

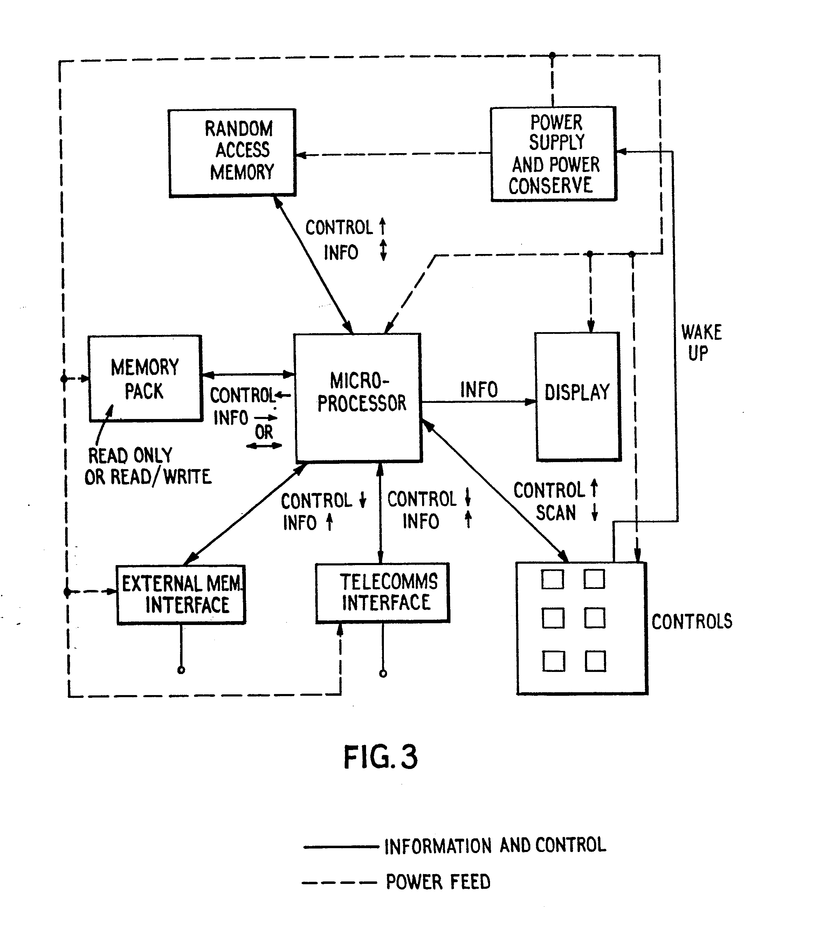

To conserve battery power (when the arrangement is not mains powered) and as an alternative to an on/off switch, a time-out can be provided which on expiry causes the scanning to cease and the microprocessor to be powered down. One or more buttons then have a "wake up" function as indicated in Figure 3 which causes these functions to be powered up again and operation to be resumed. Note that the current page continues to be displayed when the unit is powered down, and acts as a "bookmark" for use when reading is resumed. The RAM memory could also be left powered up or down depending on the need to keep information against cost of keeping it.

The application of the present invention to "electronic" books for the partially sighted was mentioned above. Here the basic requirement is to provide a "normal" display for normally sighted users, say 60 characters a line and 45 lines per page, and at least one option of a "large" display with say 20 characters per line and 15 lines per page (giving a 9-fold increase in character area). Options between the "large" and the "normal" are also possible. The display has a page control which can move backwards and forwards through the pages of the book, as indicated above. For partially sighted users an additional "size" control is provided to select the required display size.

A variant of this is to have a moving field under user control, such that the line being read is magnified to a greater extent than the lines preceding it and following it. Thus the user can keep the shape of the sentence being read in vision without necessarily being able to decipher it all at the same time, which may have subjective advantages.

There are two approaches to providing variable pagination and lineation:

(1)     The basic material which is stored in character format has multiple sets of delineation and pagination control characters and perhaps page numbers.

(2)     The basic material is unpaginated and unlineated, or contains only normal pagination and delineation. A processor in the display module has an algorithm to calculate lineation and pagination control characters for the large (and normal if appropriate) displays, and to insert them into the stored material to be viewed. Pages are then numbered and displayed if required.

In either case the size control setting determines which set of control characters are to be calculated if necessary and to be regarded as valid for display purposes. The unwanted set or sets can either be deleted or ignored. Deletion followed by translation of the valid set into internal constants suits many forms of display interface implementation.

The display module contains character generating circuits similar to those available in any display working on a matrix principle. One large flat display for example uses a character field of 9 x 16 pixels for normal size characters. However, in an "electronic book", such characters are available in various fonts and the input material contains control characters to instruct the processor as to which font to use. The additional requirement for partially-sighted users is for the characters to be "blown up", for example 27 x 48 pixels or 18 x 32 pixels. Such character size enhancement is a standard feature on a number of current display products.

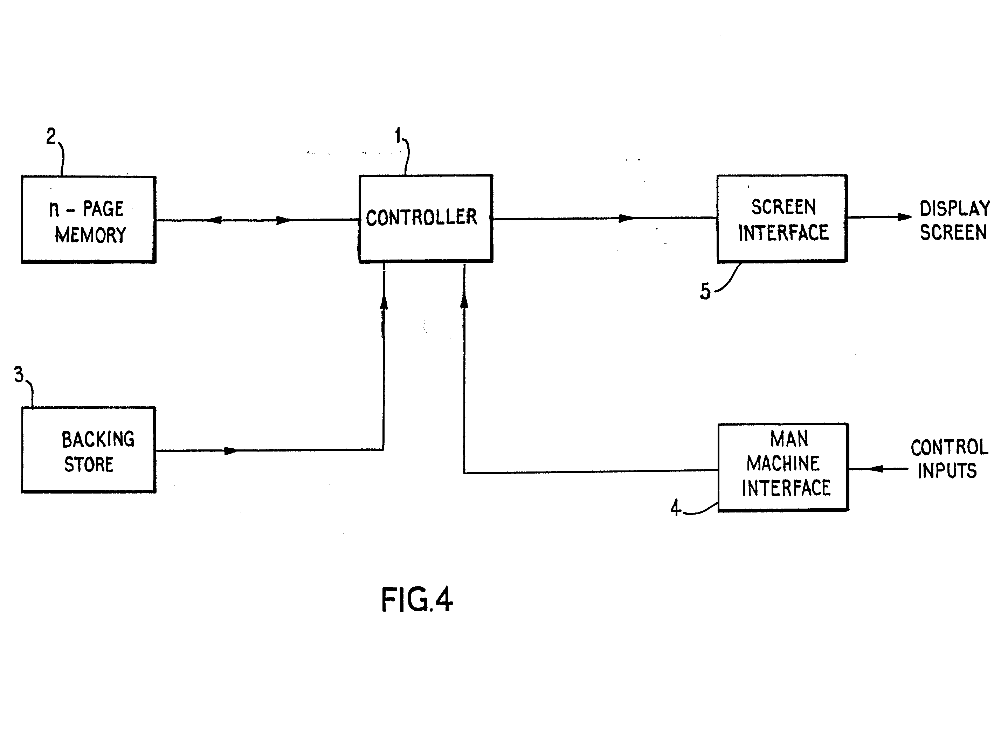

In the arrangement of Figure 4 the controller 1 contains the "intelligence" of the system and includes a microprocessor and its associated programme memory and input output circuits. There is an n-page RAM memory 2, "Page" here referring to the number of pages of normal display material stored
for immediate access. The value of n might be 2
or 3 in this case, but depends on the access time
to information in the backing store 3. Information
from the backing store 3 is transferred into the
n-page memory 2 and the additional delineation and
pagination characters are inserted as necessary.
Selection of page number, and display size is
effected via the man-machine interface 4. This
includes a touch sensitivity overlay on the display
and/or control buttons and switches. The screen
interface 5 contains the character generation
circuits and the display drivers. According to the
display size setting, the control passes to the
screen interface information containing only
the delineation and pagination characters
pertinent to that size of display. In the case
of a flat panel smectic display this information
is stored on the display, but in other types of
display that need continual refresh it is stored
in the screen interface. Information on character
size and font is also passed by the controller to
the screen interfaces.

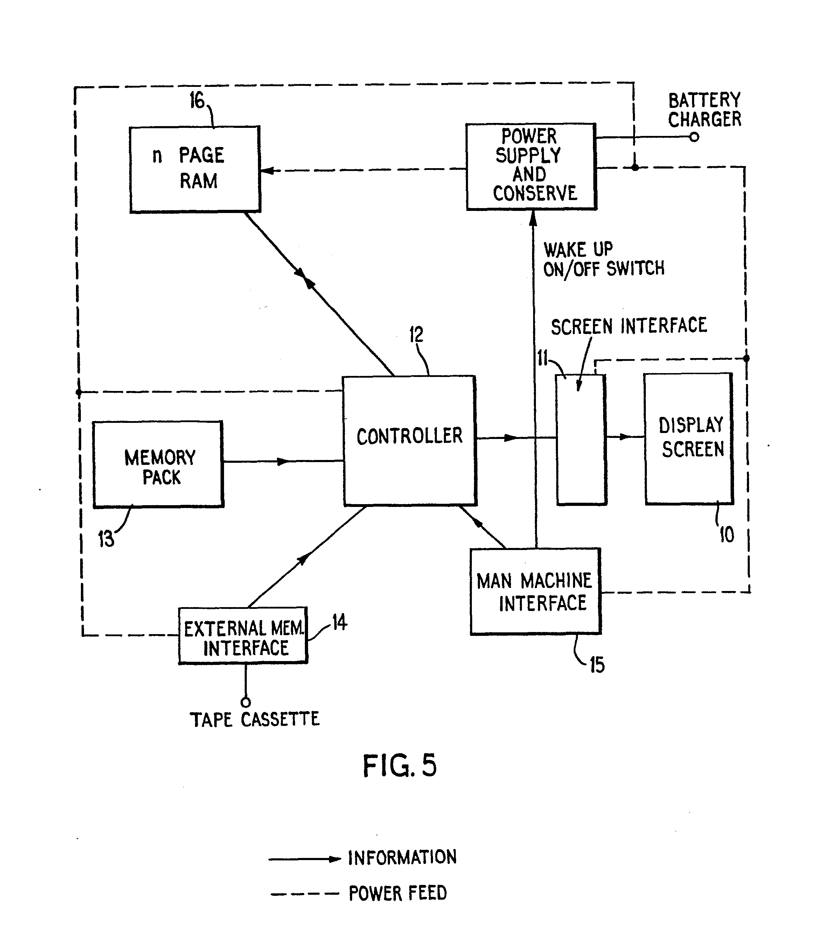

Referring now to Figure 5, the smectic
liquid crystal display panel 10 is organised on
a matrix basis, and needs column and row drivers,
which are realised in LSI form. With the current
state of smectic display technology the voltages
used to clear the display to the scattering
state are about 300 volts for about 20ms, and
to write the display to the clear state about 150
volts at about 2kHz for about 6ms. Both
scattering and clearing voltages applied
symmetrically with regard to polarity if the life
of the display is not to be reduced. The display
drivers are mounted on the back of the display panel, e.g. using TAB (tape automatic bonding). The display drivers are closely associated and are integrated with storage and decode circuits that translate the input to the screen interface module 11 into the rows and columns to be written or erased. This interface may be serial, or 8 bit or 16 bit parallel, to match the control processor word length, but is "narrow" i.e. it involves a number of lines small in relation to the number of columns plus rows on the display (e.g. 1120). The information crossing this interface 11 is in the form of "commands" and "data". The commands indicate the nature of the operation i.e. "clear" or "write", and the data indicate the rows and columns to be cleared or written. A special command to clear the complete screen is provided.

The controller 12 contains a microprocessor, a RAM, a ROM, and an I/O interface.

The microprocessor is an 8 bit machine (but a 16 bit machine can be used) and has "on chip" memory and I/O. Some memory is external and there may be a separate I/O chip depending on the choice of processor. The control processor configuration is conventional, as recommended by the manufacture.

The ROM 13 contains the programmes needed to carry out the algorithms described and to control information flows between the other modules (i.e. screen interface 11, external memory interface 14, man machine interface 15, n-page memory 16 and memory pack 13).

The RAM in the controller provides a small amount of memory in addition to the n-page memory 16 (see below), and is used to store the working variables.

The I/O interface handles:

number of pages of normal display material stored for immediate access. The value of n might be 2 or 3 in this case, but depends on the access time to information in the backing store 3. Information from the backing store 3 is transferred into the n-page memory 2 and the additional delineation and pagination characters are inserted as necessary. Selection of page number, and display size is effected via the man-machine interface 4. This includes a touch sensitivity overlay on the display and/or control buttons and switches. The screen interface 5 contains the character generation circuits and the display drivers. According to the display size setting, the control passes to the screen interface information containing only the delineation and pagination characters pertinent to that size of display. In the case of a flat panel smectic display this information is stored on the display, but in other types of display that need continual refresh it is stored in the screen interface. Information on character size and font is also passed by the controller to the screen interfaces.

Referring now to Figure 5, the smectic liquid crystal display panel 10 is organised on a matrix basis, and needs column and row drivers, which are realised in LSI form. With the current state of smectic display technology the voltages used to clear the display to the scattering state are about 300 volts for about 20ms, and to write the display to the clear state about 150 volts at about 2kHz for about 6ms. Both scattering and clearing voltages applied symmetrically with regard to polarity if the life of the display is not to be reduced. The display drivers are mounted on the back of the display panel,

0145206

e.g. using TAB (tape automatic bonding). The display drivers are closely associated and are integrated with storage and decode circuits that translate the input to the screen interface module 11 into the rows and columns to be written or erased. This interface may be serial, or 8 bit or 16 bit parallel, to match the control processor word length, but is "narrow" i.e. it involves a number of lines small in relation to the number of columns plus rows on the display (e.g. 1120). The information crossing this interface 11 is in the form of "commands" and "data". The commands indicate the nature of the operation i.e. "clear" or "write", and the data indicate the rows and columns to be cleared or written. A special command to clear the complete screen is provided.

The controller 12 contains a microprocessor, a RAM, a ROM, and an I/O interface.

The microprocessor is an 8 bit machine (but a 16 bit machine can be used) and has "on chip" memory and I/O. Some memory is external and there may be a separate I/O chip depending on the choice of processor. The control processor configuration is conventional, as recommended by the manufacture.

The ROM 13 contains the programmes needed to carry out the algorithms described and to control information flows between the other modules (i.e. screen interface 11, external memory interface 14, man machine interface 15, n-page memory 16 and memory pack 13).

The RAM in the controller provides a small amount of memory in addition to the n-page memory 16 (see below), and is used to store the working variables.

The I/O interface handles:

(a)     Serial inputs from backing store.

(b)     Outputs to the screen interface module 11
        which are parallel.

(c)     Inputs from the man-machine interface
        15.

(d)     Inputs from the external memory interface
        14 if one is needed as a separate entity.

The n-page RAM 16 and the memory pack 13
are within the address space of the processor, and
are connected to the processor's memory bus, not to
special I/O ports.  Inputs from the man-machine
interface 15 are scanned either periodically or
following an interrupt to the processor from one
or several interrupt lines connected from the
man-machine interface.

The n-page RAM 16 stores textual
information to be displayed on the screen, and is
a conventional memory configuration attached to the
memory bus of the microprocessor.  Information is
loaded by the controller 12 after being obtained
from an external source, e.g. a tape cassette.
At the instigation of the controller 12, the
memory is read for display on the screen.

As an alternative or additionally to
the n-page RAM and an external cassette, a memory
pack 13 can be plugged into the "electronic book".
The pack contains read only memory (ROM) within the
address space of the processor.  However, this is
probably only suitable for use with processors with
an address space in excess of 64 kbytes and would
ideally need an address space of the  256 kbyte
order.  The memory uses VLSI semiconductor circuits.

The external memory interface 14 is only
needed as a separate entity when the I/O interface
of the controller cannot match the requirements of the externals storage medium, e.g. if more character buffering is needed than the controller I/O interface can provide. It consists of the logic and storage needed to transfer characters from an external storage medium (e.g. cassette) to the input of the controller to be put in the n-page RAM 16. The commonest information storage is a digital cassette similar to that used for home computers, in which case the interface is character serial and uses the conventions that apply thereto.

Figure 2 shows a "micro-cassette" built into the back of the display rather than as a separate stand alone item, which could apply in the case of the "book" of partially-sighted users, but similar interface considerations apply.

In the man-machine interface inputs are from mechanical buttons and/or a touch-sensitive overlay. With a touch-sensitive overlay part of the screen is assigned to programmable button functions. For partially sighted users, the buttons should be much larger legends than normal, which may limit the number of buttons available. Electronics associated with the button/overlay function staticise the output from an operation by setting a bit in a register. The controller processor examines the contents of this register as indicated above, and resets any bits that are set.

The minimum set of functions needed by button control are size (in steps), page advance, and page retract.

Normally power is supplied from internal batteries which can be of the primary (throw away) or secondary (rechargeable) type. In the latter case a socket is provided to connect an external battery charger which can also be used as an external power supply. To conserve power, the equipment is designed to go into a "sleep" state in which only the RAM is powered in order to conserve the data stored therein. When an on/off switch is provided, the equipment is completely powered down in switch off.

0145206

CLAIMS:

1. An intelligence display arrangement, characterised in a static electronic display device of the co-ordinate matrix type on which a page of text or illustrations, or part of such a page, can be displayed, a memory unit which contains the material to be displayed, and control means for the arrangement, wherein when the arrangement is in use the pages to be displayed are successively transferred to the immediate access store, each page or each part thereof being transferred from the immediate access store to the display device as required by, and under the control of, the user.

2. An arrangement as claimed in claim 1, characterised in that the display device is an ambiently lit smectic liquid crystal device.

3. An arrangement as claimed in claim 1 or 2, characterised in that the immediate access store is a semiconductor RAM and the memory unit is a cartridge, disc, or plugged in cassette.

4. An arrangement as claimed in claim 1, 2 or 3, characterised in that it includes a port for connection to a telecommunication line, so that data to be displayed can be obtained from a remote point.

5. An arrangement as claimed in claim 1, 2, 3 or 4, characterised in that the control means includes means to display the current page, or part thereof, or the current line, or part thereof, on an enlarged scale.

6. An arrangement as claimed in claim 5, characterised in that when a line or part thereof is displayed on an enlarged scale the remainder of the material visible on the display device is shown at the normal size.

7. An arrangement as claimed in any one of the preceding claims, and in which when the arrangement is not in use most of the circuitry is switched off but the display shows the current page, line, or portions thereof.

8. An arrangement as claimed in any one of the preceding claims, and in which two pages can be displayed side by side on the display.

7. An arrangement as claimed in any one of the preceding claims, and in which when the arrangement is not in use most of the circuitry is switched off but the display shows the current page, line, or portions thereof.

8. An arrangement as claimed in any one of the preceding claims, and in which two pages can be displayed side by side on the display.

FIG.1

FIG.2

FIG. 3

——— INFORMATION AND CONTROL

----- POWER FEED

FIG.4

FIG. 5

→ INFORMATION

--- POWER FEED